# EUROPÄISCHE PATENTSCHRIFT

(11) **EP 1 953 889 B1**
(45) Veröffentlichungstag und Bekanntmachung des Hinweises auf die Patenterteilung: **19.11.2014**
(21) Anmeldenummer: 08000924.4
(22) Anmeldetag: 18.01.2008
(51) Int. Cl.: H02G 11/00, B66F 9/24, H02G 3/04

(54) **Verbindungskabel zwischen einer Batterie und einem Antriebsmotor eines Flurförderzeugs**
Connector cable between a battery and a drive motor of an industrial truck
Câble de liaison entre une batterie et un moteur d'entraînement d'un chariot de manutention

(30) Priorität: 01.02.2007 DE 102007004989
(43) Veröffentlichungstag der Anmeldung: 06.08.2008
(73) Patentinhaber: Jungheinrich Aktiengesellschaft, 22047 Hamburg (DE)
(72) Erfinder: Fähndrich, Rainer, Dipl.-Ing., 22889 Tangstedt (DE)
(74) Vertreter: Hauck Patent- und Rechtsanwälte

(56) Entgegenhaltungen:
- EP-A2- 1 138 555
- WO-A1-2005/071284
- DE-U1- 8 715 557
- JP-A- 1 321 810
- JP-A- 2003 267 161

## Beschreibung

Die Erfindung bezieht sich auf ein Verbindungskabel nach dem Oberbegriff des Patentanspruchs 1.

Bei verschiedenen Flurförderzeugen, insbesondere bei Niederhubfahrzeugen, ist die Antriebsbatterie auf dem Lastteil angeordnet, während der Antriebsmotor naturgemäß im Antriebsteil untergebracht ist. Somit wird bei jedem Hubvorgang die Antriebsbatterie gegenüber dem Antriebsmotor angehoben und abgesenkt. Das Batteriekabel, das über eine Schlaufe vom Lastteil zum Antriebsteil verlegt ist, wird dabei während des Hebe- und Senkvorgangs frei bewegt, wobei je nach Kabeldicke ein Mindestbiegeradius einzuhalten ist. Die Batteriekabel, zumeist zwei Kabel, haben je nach Leistung des Fahrmotors bzw. Hubmotors einen Querschnitt von etwa 35 mm, was einem Durchmesser von 12 mm entspricht.

Die für diese Zwecke verwendeten Kabel werden üblicherweise von einer Rolle genommen und weisen somit die Eigenschaft auf, die gewundene Form beizubehalten. Wenn bei der Verlegung die Windungsrichtung nicht eingehalten wird, besteht die Gefahr, daß die Kabel zur Seite schwingen und dadurch an benachbarten Teilen des Fahrzeugs scheuem, was auf Dauer zu einem Kurzschluss führt. Bei Flurförderzeugen ist der Bauraum zur Aufnahme der Kabel äußerst beschränkt. Es ist daher notwendig, daß die Kabel so angeordnet und geführt werden, daß sie benachbarte Teile nicht berühren.

Aus EP 11 38 555 A2 ist ein schleifenförmig geführtes Verbindungskabel mit einer Kabelführung bekannt geworden, die aus einer Vielzahl von Klauenabschnitten besteht, zwischen denen Verbindungsabschnitte liegen, die als Filmscharniere geformt sind, über die eine Biegung der Schlaufe stattfindet. Der Abrollweg ist durch die Stabilität der senkrecht stehenden Schlaufe begrenzt. Der freie Schlaufenbereich ist im Verhältnis zur Länge der Kabelführung lang, sodass die Kabelführung unter Umständen nicht die gewünschte senkrechte Position im Betrieb gewährleistet.

Der Erfindung liegt daher die Aufgabe zugrunde, ein Verbindungskabel zwischen eine Batterie und einem Antriebsmotor eines Flurförderzeugs vorzusehen, das in einem engen Bauraum untergebracht werden kann, ohne daß Teile des Flurförderzeugs durch Auslenkung aus der Krümmungsebene berührt werden.

Diese Aufgabe wird durch die Merkmale des Patentanspruchs 1 gelöst.

Bei der Erfindung ist eine Kabelführung vorgesehen, die einen Schalenabschnitt aufweist mit einer vorgegebenen Krümmung. Von dem Schalenabschnitt ist mindestens ein Kabel im Schlaufenbereich annährend passend aufgenommen und festgelegt. Im Abstand zum Schalenabschnitt ist jeweils eine Kabelaufnahme vorgesehen, welches die Kabel aufnimmt und über Befestigungsmittel am Last-bzw. Antriebsteil befestigt. Zwischen den Kabelaufnahmen sind Verbindungsabschnitte vorgesehen, welche in der Krümmungsebene des Schalenabschnitts elastischer sind, als quer dazu.

Der Schalenabschnitt der erfindungsgemäßen Kabelführung sorgt für die exakte Positionierung beider Kabel nebeneinander, insbesondere wenn beide aufgenommen werden. Die Kabel können bei einer Relativbewegung von Lastteil und Antriebsteil exakt abrollen und dadurch nicht seitlich an angrenzenden Bauteilen scheuern. Ein gewisser Schutz kann auch durch den Schalenabschnitt selbst gewährleistet sein, der die Kabel seitlich so umfasst, daß bei einem Scheuern oder Anschlagen gegen Teile des Flurförderzugs der Kontakt mit dem Schalenabschnitt erfolgt und nicht vom Kabel.

Die in der Krümmungsebene der Kabel bzw. des Schalenabschnitts elastischen Verbindungsabschnitte geben bei einem Abrollen der Kabel weich nach. Bei einer Verformung in Querrichtung müssen hingegen relativ größere Kräfte aufgebracht werden, so daß auch die Verbindungsabschnitte dafür sorgen, daß die Kabel nur in eine Ebene abrollen.

Die Kabelaufnahmen dienen zur Anbringung der Kabel am Last- bzw. Antriebsteil und auch der Festlegung der Verbindungsabschnitte am zugeordneten Ende.

Nach einer Ausgestaltung der Erfindung ist vorgesehen, daß das oder die Kabel im Schalenabschnitt eingeclipst sind. Somit haben die Ränder des Schalenabschnitts einen kleineren Abstand voneinander als der Durchmesser bzw. die Breite des bzw. der nebeneinander angeordneten Kabel. Alternativ ist es auch möglich, eine Festlegung des Kabels bzw. der Kabel mit Hilfe mehrerer beanstandet angebrachter Kabelbinder an dem Schalenabschnitt vorzusehen. Für das Einclipsen ist auch nicht erforderlich, daß dies über die gesamte Länge des Schalenabschnitts erfolgt. Unter Umständen reicht auch aus, wenn am Schalenabschnitt in Abständen Clips- Abschnitte vorgesehen sind, welche die Schnappverbindung mit Kabeln herstellen.

Bei der Erfindung ist die Kabelführung einteilig aus Kunststoffmaterial durch Spritzgießen als Einheit ausgebildet. Die Kabelaufnahmen können ebenfalls schalenförmig sein sowie mit Löchern versehen, die eine Schraubbefestigung am Last- bzw. Antriebsteils ermöglichen.

Die Verbindungsabschnitte sind nach einer weiteren Ausgestaltung der Erfindung als flache Streifen geformt, die sich an den Boden des Schalenabschnitts anschließen.

Der Schalenabschnitt der erfindungsgemäßen Kabelführung ist nicht symmetrisch zum tiefsten Punkt einer Schleife angeordnet, sondern beginnt mit dem Krümmungsanfang der Schlaufe im Bereich des Antriebsteils und erstreckt sich nur über einen Teil der Kabelkrümmung in Richtung des Lastteils, nämlich über eine halbe bis dreiviertel Länge des Krümmungsbogens vom ersten Ende an gerechnet.

Die erfindungsgemäße Kabelführung mit ihrem Schalenabschnitt verhält sich wie eine bewegliche Kabelrolle, die beim Heben oder Senken des Lastteils mitbewegt wird.

Ein Ausführungsbeispiel der Erfindung wird nachfolgend anhand von Zeichnungen näher erläutert.
- Fig. 1: zeigt perspektivisch andeutungsweise ein Flurförderzug mit einer Kabelverbindung zwischen Last- und Antriebsteil
- Fig. 2: zeigt die Kabelverbindung nach Fig. 1 ebenfalls in perspektivischer Darstellung mit einer Kabelführung nach der Erfindung.
- Fig. 3: zeigt perspektivisch die Kabelführung nach Fig. 2.

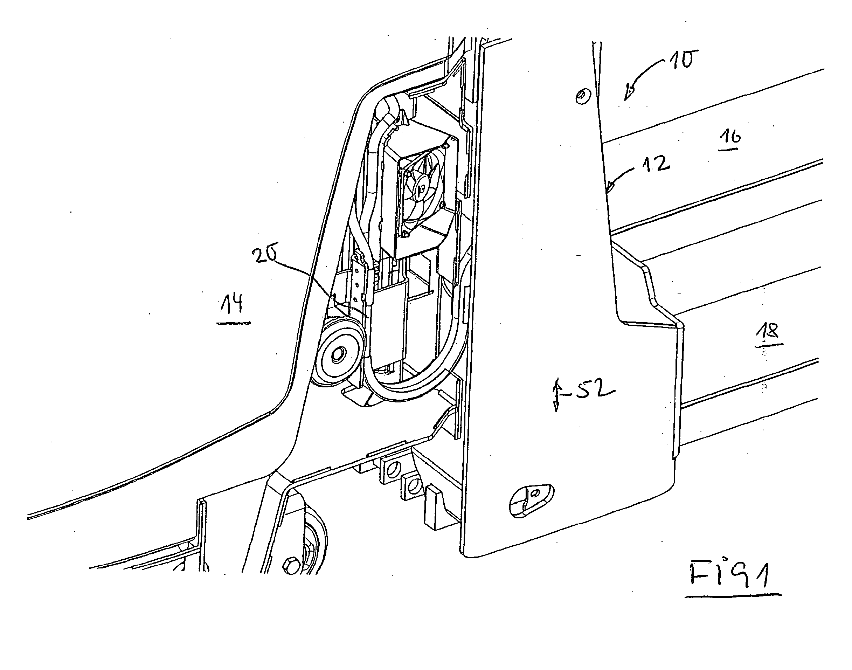

In Figur 1 ist ein Niederhubwagen 10 angedeutet mit einem Lastteil 12 und einem Antriebsteil 14. Das Antriebsteil enthält mindestens einen Antriebsmotor sowie eine Hubvorrichtung für das Lastteil, das mit zwei Radarmen 16, 18 versehen ist. Auf Einzelheiten des Niederhubwagens 10 sollte nicht näher eingegangen werden, da sie allgemeiner Stand der Technik sind.

Der nicht gezeigte Antriebsmotor wird elektrisch betrieben. Die Batterie hierfür ist im Lastteil 12 aufgenommen. Sie ist jedoch nicht gezeigt. Für eine elektrische Verbindung zwischen der Batterie und dem Antriebsmotor ist eine Kabelanordnung 20 vorgesehen. Sie besteht aus zwei nebeneinander liegenden Kabeln, die eine nach unten gerichtete Schlaufe bilden.

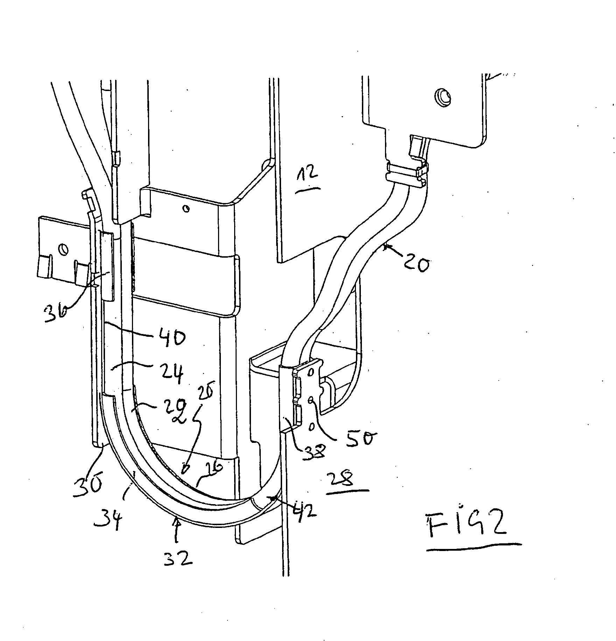

In Figur 2 ist die Kabelanordnung 20 näher dargestellt. Wie schon erwähnt, besteht sie aus zwei nebeneinander geführten Kabeln 22, 24, von welchen eine nach unten gerichtete Schlaufe 26 mit einem vorgegebenen Krümmungsradius gebildet ist. Die Kabel 22, 24 sind relativ dick und dürfen daher bei ihrer Krümmung einen Mindestradius nicht unterschreiten, da ansonsten die Gefahr eines Bruches besteht. In Figur 2 ist das Lastteil 12 nach Figur 1 durch ein Blech 28 angedeutet. Das Antriebsteil 14 ist durch ein Blech 30 angedeutet. An den Blechen 28, 30 sind die Kabel 22, 24 befestigt. Hierauf wird weiter unten noch eingegangen.

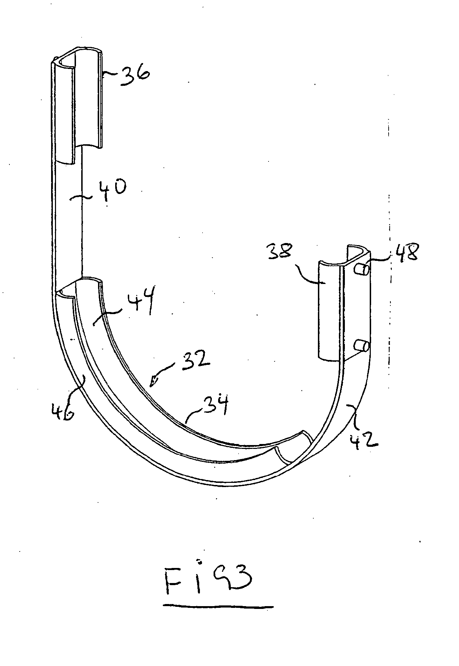

Das Kabelpaar 22, 24 ist mit einer Kabelführung 32 versehen, welche in Figur 3 näher dargestellt ist. Die Kabelführung 32 weist einen Schalenabschnitt 34 und schalenförmige Aufnahmen 36, 38 auf, wobei letztere über flache Verbindungsstreifen 40, 42 mit dem Schalenabschnitt 34 verbunden sind. Die beschriebenen Teile bilden eine Einheit, die einteilig aus weichelastischem Kunststoff spritzgegossen ist. Das Kunststoffmaterial ermöglicht eine hohe Elastizität. Der Schalenabschnitt 34 hat im Querschnitt annähernd eine U-Form, wobei jedoch die Schenkel kreisbogenförmig nach außen gebogen sind, wie deutlich in Figur 3 zu erkennen. Die konvexe Wölbung der Schenkel entspricht der Außenkontur der Kabel 22, 24, wobei der Abstand der Schenkel 44, 46 an ihrem freien Ende kleiner ist als die Breite des Kabelpaars. Somit kann der Schalenabschnitt 34 auf das Kabelpaar aufgeclipst werden wie in Figur 2 gezeigt. Die Krümmung des Schalenabschnitts 34 entspricht dabei der vorgeschriebenen Krümmung der Kabelschlaufe zwischen Last- und Antriebsteil des Niederhubwagens.

Die Verbindungsstreifen 40, 42 setzen sich vom flachen Boden des Schalenabschnitts 34 fort und sind flach geformt. Die Enden, wie erwähnt, gehen in die schalenförmigen Aufnahmen 36, 38 über, deren Abmessung und Querschnittskontur der des Schalenabschnitts 34 entsprechen. Daher können auch die Aufnahmen 36, 38 auf das Kabelpaar aufgeclipst werden. Zur weiteren Befestigung können die Kabel 22, 24 in den schalenförmigen Aufnahmen 36, 38 mit Hilfe von Kabelbindern festgelegt werden.

Die Aufnahmen 36, 38 weisen im Boden Löcher bzw. Vorsprünge 48 zur Befestigung am Blech 28 bzw. Blech 30 auf. In Figur 2 ist das Blech 28 mit entsprechenden Löchern 50 versehen. Durch den Doppelpfeil 52 ist die Höhenverstellung des Lastteils 12 nach Figur 1 angedeutet. Hierbei bewegt sich die Schlaufe 32 mit nach oben, ohne das sich ihre Krümmung ändert. Außerdem ist sichergestellt, daß unabhängig von der ursprünglichen Orientierung der Kabel 22, 24 auf eine Kabelrolle, welche durch die Aufwicklung auf der Rolle vorgegeben ist, die Kabel 22, 24 in einer vorgegebenen Ebene, vorzugsweise einer vertikalen Ebene bleiben, unabhängig auch von der Höhenverstellung des Lastteils 12. Die Verbindungsstreifen 40, 42 lassen sich hierbei leicht verbiegen, ohne das hierzu ein großer Kraftaufwand gehört. In Querrichtung dazu sind sie relativ steif und verhindern mithin ein Auswandern der Schlaufe 32 zur Seite hin. Dies würde sonst dazu führen, daß im beengten Aufnahmeraum des Flurförderzeugs das Kabelpaar Teile des Flurförderzeugs berühren würde. Bei Auftreten einer solchen Berührung, beispielsweise auch durch Erschütterungen, bietet der Schalenabschnitt 34 einen ausreichenden Schutz.

Es ist zu erkennen, daß der Schalenabschnitt 34 an dem Ort der Kabel 22, 24 ansetzt, an dem die Krümmung der Schlaufe 32 auf der Seite des Antriebsteils beginnt. Der Schalenabschnitt 34 erstreckt sich jedoch nicht vollständig über die annähernd halbkreisförmige Schlaufe 32, sondern endet in einem größeren Abstand zum lastteilseitigen Krümmungsende, wie Figur 2 deutlich macht. Die gezeigte Konstruktion ist dabei so beschaffen, daß die gleiche Wirkung für das Kabel erzielt werden würde, wenn sie um eine Rolle geschlungen wäre, welche den gleichen Radius wie der Schalenabschnitt 34 hat und bei der Höhenverstellung der Schlaufe 32 mitbewegt wird.

## Patentansprüche

1. Verbindungskabel welches eine hängende Schlaufe bildet, und wobei eine Kabelführung (32) vorgesehen ist, mit einem Schalenabschnitt (34) mit einer vorgegebenen Krümmung, in dem mindestens ein Kabel (20) im Schlaufenbereich (32) annähernd passend aufgenommen und festgelegt ist und im Abstand zum Schalenabschnitt (34) jeweils eine Kabelaufnahme (36, 38) das Kabel (20) zur Befestigung am Lastteil (12) bzw. Antriebsteil (14) aufnimmt und jeweils ein Verbindungsabschnitt (40, 42) zwischen dem Schalenabschnitt (34) und der betreffenden Kabelaufnahme (36, 38) vorgesehen sind, wobei die Verbindungsabschnitte in der Krümmungsebene des Schalenabschnitts (34) elastischer sind als quer dazu,
**dadurch gekennzeichnet, dass**
das eine hängende Schlaufe bildende Verbindungskabel zwischen einer Batterie und einem Antriebsmotor eines Flurförderzeugs vorgesehen ist, wobei die Batterie in einem höhenbeweglichen Lastteil und der Antriebsmotor in einem relativ zum Lastteil stationären Antriebsteil angeordnet ist, ein einziger Schalenabschnitt (34), Kabelaufnahmen (36, 38) und Verbindungsabschnitte (40, 42) als einteiliger spritzgegossener Körper aus weichelastischem Kunststoff ausgebildet sind und der Schalenabschnitt (34) mit einem ersten Ende im Bereich des Krümmungsanfangs der Schlaufe (32) liegt und das zweite Ende sich im Abstand um eine halbe bis dreiviertel Länge des Krümmungsbogens der Schlaufe (32) vom ersten Ende entfernt liegt.

2. Verbindungskabel nach Anspruch 1, **dadurch gekennzeichnet, daß** zwei Kabel (22, 24) nebeneinander im Schalenabschnitt (34) aufgenommen sind.

3. Verbindungskabel nach Anspruch 1 oder 2, **dadurch gekennzeichnet, daß** das bzw. die Kabel (22, 24) in dem Schalenabschnitt (34) eingeclipst ist bzw. sind.

4. Verbindungskabel nach Anspruch 3, **dadurch gekennzeichnet, daß** die Ränder des Schalenabschnitts (34) einen kleineren Abstand haben als die maximale Breite der Kabel (22, 24).

5. Verbindungskabel nach einem der Ansprüche 1 bis 4, **dadurch gekennzeichnet, daß** die Kabelaufnahmen (36, 38) ebenfalls schalenförmig sind und Löcher (48) für eine Schraubbefestigung am Last- bzw.- Antriebsteil (12, 14) aufweisen.

6. Verbindungskabel nach einem der Ansprüche 1 bis 5, **dadurch gekennzeichnet, daß** die Verbindungsabschnitte als flache Streifen geformt sind, die sich an dem flachen Boden des Schalenabschnitts (34) anschließen.

7. Verbindungskabel nach einem der Ansprüche 1 bis 6, **dadurch gekennzeichnet, daß** die Kabel (22, 24) in der Kabelaufnahme (36, 38) mittels eines Kabelbinders festgelegt sind.

## Claims

1. A connector cable which forms a hanging loop and wherein a cable routing (32) is provided, with a shell portion (34) having a given curvature in which at least one cable (20) in the loop region (32) is received and fixed in an approximately matching manner, and in a distance to the shell portion (34), one cable holding device (36, 38) at a time receives the cable (20) for attaching it on the load section (12) and the drive section (14), and one connector portion (40, 42) at a time is provided between the shell portion (34) and the respective cable holding device (36, 38), wherein the connector portions are more resilient in the curvature plane of the shell portion (34) than crosswise thereto,
**characterised in that**
the connector cable forming a hanging loop is provided between a battery and a drive motor of an industrial truck, wherein the battery is arranged in a height-adjustable load section and the drive motor in a drive section which is stationary with respect to the load section, all of the one single shell portion (34), the cable holding devices (36, 38) and the connector portions (40, 42) are realised in one common piece as an injection moulded body of soft elastic plastics, and the shell portion is situated in the region of the beginning of the curvature of the loop (32) with a first end,
and the second end is situated remote from the first end about a distance of one half to three-fourths of the length of the curvature arc of the loop (32).

2. The connector cable according to claim 1, **characterised in that** two cables (22, 24) are received side by side in the shell portion (34).

3. A connector cable according to claim 1 or 2, **characterised in that** the cable(s) (22, 24) is/are clipped into the shell portion (34).

4. The connector cable according to claim 3, **characterised in that** the edges of the shell portion (34) have a smaller distance from each other than the maximum width of the cables (22, 24).

5. A connector cable according to any one of claims 1 to 4, **characterised in that** the cable holding devices (36, 38) are also shell-shaped and comprise holes (48) for attachment by screws on the load- and drive section (12, 14), respectively.

6. A connector cable according to any one of claims 1 to 5, **characterised in that** the connector portions are shaped as flat stripes which join the flat bottom of the shell portion (34).

7. A connector cable according to any one of claims 1 to 6, **characterised in that** the cables (22, 24) are fixed in the cable holding device (36, 38) by means of a cable tie.

## Revendications

1. Câble de liaison qui forme une boucle suspendue et dans lequel est pourvu un guide câbles (32), avec une partie d'enveloppe (34) ayant une courbure donnée, dans laquelle au moins un câble (20) est accommodé et fixé de manière approximativement adaptée dans la région de la boucle (32), et à une distance de la partie d'enveloppe (34), une prise de câble (36, 38) reçoit chaque fois le câble (20) pour fixation sur la partie de charge (12) et respectivement sur la partie d'entraînement (14), et une section de liaison (40, 42) est chaque fois pourvue entre la partie d'enveloppe (34) et la prise de câble (36, 38) respective, les sections de liaison étant plus élastiques dans la plaine de courbure de la partie d'enveloppe (34) que transversalement à celle-ci,
**caractérisé en ce que**
le câble de liaison formant une boucle suspendue est pourvu entre une batterie et un moteur d'entraînement d'un chariot de manutention, dans lequel la batterie est agencée dans une partie de charge déplaçable en hauteur, et le moteur d'entraînement dans une partie d'entraînement qui est stationnaire par rapport à la partie de charge, une seule partie d'enveloppe (34), les prises de câble (36, 38) et les sections de liaison (40, 42) sont faites en une seule pièce comme un corps moulé par injection en matière plastique souple et élastique, et la partie d'enveloppe est située dans la région du commencement de courbure de la boucle (32) avec une première extrémité, et la deuxième extrémité est éloignée de la première extrémité pour une distance de la moitié à trois quarts de la longueur de l'arc de courbure de la boucle (32).

2. Câble de liaison selon la revendication 1, **caractérisé en ce que** deux câbles (22, 24) sont logés côté à côté dans la partie d'enveloppe (34).

3. Câble de liaison selon la revendication 1 ou 2, **caractérisé en ce que** le(s) câble(s) (22, 24) est/sont enclipsé(s) dans la partie d'enveloppe (34).

4. Câble de liaison selon la revendication 3, **caractérisé en ce que** les bords de la partie d'enveloppe (34) ont une distance l'un de l'autre plus petite que la largeur maximale des câbles (22, 24).

5. Câble de liaison selon l'une quelconque des revendications 1 to 4, **caractérisé en ce que** les prises de câble (36, 38) sont aussi en forme d'enveloppe et comportent des trous (48) pour les fixer dans les parties de charge et respectivement d'entraînement (12, 14) par vissage.

6. Câble de liaison selon l'une quelconque des revendications 1 to 5, **caractérisé en ce que** les sections de liaison sont formées comme des bandes plates qui se serrent contre le fond de la partie d'enveloppe (34).

7. Câble de liaison selon l'une quelconque des revendications 1 to 6, **caractérisé en ce que** les câbles (22, 24) sont fixés dans la prise de câble (36, 38) moyennant une attache de câble.
